# EUROPÄISCHE PATENTSCHRIFT

(11) **EP 2 082 642 B1**
(45) Veröffentlichungstag und Bekanntmachung des Hinweises auf die Patenterteilung: **24.08.2011**
(21) Anmeldenummer: 09000825.1
(22) Anmeldetag: 22.01.2009
(51) Int. Cl.: A01G 3/04, A01G 17/02

(54) **Entlaubungsmaschine**
Defoliation device
Machine de défoliage

(30) Priorität: 22.01.2008 DE 202008000823 U; 11.04.2008 DE 102008018640
(43) Veröffentlichungstag der Anmeldung: 29.07.2009
(73) Patentinhaber: Rinklin, Willy, 79427 Eschbach (DE)
(72) Erfinder: Rinklin, Willy, 79427 Eschbach (DE)

(56) Entgegenhaltungen:
- EP-A- 0 597 253
- DE-A1-102007 008 040
- US-A1- 2007 129 122

## Beschreibung

Die Erfindung bezieht sich auf eine Entlaubungsmaschine, die insbesondere zum Entlauben von Reben bestimmt ist und die wenigstens ein Sauggebläse sowie zumindest zwei gegenläufig drehantreibbare Förderwalzen hat, welche zum Fördern des Laubs bestimmt sind, wobei eine dieser zumindest zwei Förderwalzen perforiert ist, so dass die Blätter an diese Förderwalze angesaugt werden.

Aus der DE 10 2007 008 040 A1 ist beispielsweise eine Entlaubungsmaschine bekannt, die ein Sauggebläse aufweist, das axial an einer gelochten und drehantreibbaren Saugwalze angeschlossen ist. Durch die Löcher in der Walze entsteht ein radialer Saugstrom an der Saugwalze. Die Entlaubungsmaschine weist weiterhin eine gegenläufig drehantreibbare Gegenwalze und eine drehantreibbare Bürstenwalze auf.

Im Betrieb wird die Entlaubungsmaschine in der Nähe der Blätter vorbeigeführt. Diese werden durch den radialen Luftstrom der Saugwalze angesaugt und durch die Gegenwalze abgezupft. Die Blätter bleiben dabei durch den radialen Saugstrom an der Saugwalze haften. Die Blätter müssen durch die Bürstenwalze abgebürstet werden. Die abgebürsteten Blätter werden durch die Bürste ausgeworfen. Dabei kann es vorkommen, dass einige Blätter nicht abgebürstet werden und somit die Löcher der Saugwalze zunehmend verstopfen, so dass immer weniger Saugleistung zur Verfügung steht, bis die Saugwalze vollständig durch Blätter bedeckt ist. Zudem können die auf der Saugwalze haftenden Blätter von der Bürste durchstochen werden, so dass das Sauggebläse durch Blattreste und Feuchtigkeit verschmutzt wird, die durch die Löcher in das Innere der Walze gesaugt werden. Darüber hinaus können auch Blattreste an der Bürste haften bleiben, so dass auch die Bürste mit der Zeit zunehmend verschmutzt.

Aus der US 2007/0129122 A1 ist eine Entlaubungsmaschine vorbekannt, die ebenfalls ein Sauggebläse umfasst, das in einem trichter- oder zylinderförmigen Gehäuse angeordnet ist.

Aus der EP 0 597 253 A1 kennt man bereits eine an einem Traktor montierbare Entlaubungsmaschine.

Aufgabe der Erfindung ist es daher, eine Entlaubungsmaschine zu schaffen, die eine dauerhaft konstante Saugleistung aufweist und die im Betrieb weniger verschmutzt.

Diese Aufgabe wird erfindungsgemäß durch die im geltenden Patentanspruch 1 enthaltenen Merkmale gelöst.

Die Blätter werden durch die schlitzförmige Ansaugöffnung angesaugt und durch die gegenläufig rotierenden Förderwalzen abgetrennt. Die Blätter werden dann durch den Ansaugkanal und durch das Ansauggebläse gefördert und ausgeworfen. Dazu ist keine Bürste notwendig und somit besteht auch nicht die Gefahr, dass Blätter durchstochen werden. Die erfindungsgemäße Entlaubungsmaschine verschmutzt daher nicht.

Das Sauggebläse ist vorzugsweise innerhalb des Saugkanals oder an dessen den Förderwalzen abgewandten Ende angeordnet. An der Druckseite ist ein Auswurfkanal angeordnet, durch den die Blätter aus dem Saugkanal oder dem Sauggebläse ausgeworfen werden. Die Auswurfrichtung des Auswurfkanals kann dabei festgelegt oder einstellbar sein.

diese perforierte Förderwalze hindurch die Blätter an die Förderwalze gesaugt. Somit steht eine größere Ansaugfläche zur Verfügung, ohne dass die Saugleistung reduziert wird. Es ist daher möglich, auch aus größerer Entfernung noch Blätter anzusaugen. Die angesaugten Blätter werden auf der Oberfläche der Saug-Förderwalze mitgenommen, bis sie durch die Gegen-Förderwalze abgezupft werden. Die abgezupften Blätter werden an der Rückseite der Förderwalzen Eine besonders vorteilhafte Ausführung gemäß der Erfindung sieht vor, dass wenigstens eine der eine Ansaugöffnung begrenzenden Förderwalzen perforiert ist, so dass die Blätter durch die Förderwalze hindurch angesaugt werden. Da wenigstens eine der eine Ansaugöffnung begrenzenden Förderwalzen perforiert ist, werden durch. durch den Saugstrom von den Förderwalzen abgesaugt, so dass einem Anhaften der Blätter an der Förderwalze und einer Verringerung der Saugleistung während des Betriebes wirkungsvoll entgegengewirkt wird.

Die gegenläufige, zweite der eine Ansaugöffnung begrenzenden Förderwalzen weist bevorzugt eine Haftoberfläche auf, die die an der perforierten Walze angesaugten Blätter mit den Blattstielen vom Stamm abzupft. Die zweite, die Ansaugöffnung begrenzende Förderwalze weist eine Haftoberfläche auf und ist dazu als Gummiwalze ausgebildet oder mit einer Gummi-Beschichtung versehen. Insbesondere bei nassen Blättern besteht die Gefahr, dass vereinzelt Blätter nicht erfasst werden, weil sie zu rutschig sind. Durch die Haftoberfläche wird nun erreicht, dass möglichst alle Blätter sofort abgezupft werden.

Zweckmäßigerweise können die Walzen so gelagert sein, dass der Spalt einstellbar ist.

Die perforierte Förderwalze kann Löcher und/Schlitze aufweisen. Die Löcher können dabei kreisförmig oder auch beliebig anders geformt sein. Vorteilhaft ist es, wenn die Löcher möglichst groß sind, damit der volle Saugstrom an der Ansaugöffnung zur Verfügung steht.

Die Entlaubungsmaschine ist für den Einsatz an einem Traktor oder einer vergleichbaren Zugmaschine vorgesehen. Daher ist es zweckmäßig, wenn die Förderwalzen und/oder das Sauggebläse einen Hydraulikantrieb aufweisen.
Wenn die Drehzahl der Förderwalzen unabhängig von der Drehzahl des Sauggebläses regelbar ist, kann der Entlaubungsvorgang gezielt gesteuert werden.

Insbesondere bei nassem Laub ist es vorteilhaft, wenn die Entlaubungsmaschine zumindest ein zweites Gebläse aufweist, dessen Austrittskanal vor oder hinter dem Ansaugkanal angeordnet ist, so dass die entlaubten Reben angeblasen werden. Dadurch können die entlaubten Reben getrocknet und von leicht anhaftendem Schmutz befreit werden.

Das Sauggebläse und/oder das zweite Gebläse ist bevorzugt ein Schaufelradgebläse und insbesondere als Radialgebläse ausgebildet. Vorteilhaft ist es, wenn die Schaufelräder der Gebläse auf der gleichen Welle angeordnet sind. Somit ist nur ein Antriebsmotor für beide Gebläse notwendig. Trotzdem können die Lauf- oder Schaufelräder der beiden Gebläse in getrennten Gebläsegehäusen vorgesehen sein, so dass keine Beeinträchtigung der beiden Funktionen untereinander möglich ist. Gerade ein Radialgebläse ermöglicht die Anordnung der den beiden Gebläsen zugeordneten Schaufelräder nebeneinander auf einer Welle, da Saug- und Druckseite rechtwinklig zueinander stehen.

Innerhalb des Saugkanals sind bevorzugt Leitbleche angeordnet, die das abgetrennte Laub in das Zentrum des Sauggebläses leiten. Im Zentrum des Gebläserades ist die Umlaufgeschwindigkeit auch bei hohen Drehzahlen relativ gering, so dass die Blätter dort nicht zerfetzt werden. Sind die Blätter dann innerhalb des Gebläserades, werden sie radial nach außen befördert. Die Blätter werden also nicht zerhäckselt, sondern - so wie sie eingesaugt werden - auch wieder ausgeworfen. Dadurch wird das Gebläse nur gering bis gar nicht verschmutzt und hat dadurch auch eine höhere Lebensdauer.

Damit beim Betrieb der Entlaubungsmaschine die Förderwalzen nicht beschädigt werden oder die Früchte durch die rotierenden Walzen beschädigt werden, ist es sinnvoll, wenn wenigstens ein Schutzblech als teilweise Abdeckung wenigstens einer Förderwalze vorgesehen ist.

Die Entlaubungsmaschine ist bevorzugt im wesentlichen aus Aluminium hergestellt, damit sie einfach gehandhabt werden kann. Um einen effektiven Arbeitseinsatz zu ermöglichen, kann die Entlaubungsmaschine zusätzlich mit einem Laubhefter und/ oder einem Laubschneider einseitig oder überzeilig kombinierbar sein.

Weitere Merkmale der Erfindung ergeben sich aus den Ansprüchen sowie der Zeichnung in Verbindung mit der Beschreibung. Nachstehend wird die Erfindung anhand bevorzugter Ausführungsbeispiele noch näher erläutert.

Es zeigt zum Teil stark schematisiert:
- Fig. 1: einen Querschnitt durch eine erfindungsgemäße Entlaubungsmaschine,
- Fig. 2: die Strömungsverhältnisse in der Entlaubungsma- schine,
- Fig. 3: die Entlaubungsmaschine im Betrieb mit Blättern,
- Fig. 4: eine Ausführung der Erfindung mit einer zusätzli- chen Bürste,
- Fig. 5: eine perspektivische Ansicht einer erfindungsgemä- β en Entlaubungsmaschine,
- Fig. 6: die Entlaubungsmaschine der Fig. 5 aus einer ande- ren Perspektive,
- Fig. 7: eine perspektivische Ansicht einer Entlaubungsma- schine mit einem zweiten Sauggebläse,
- Fig. 8: die Entlaubungsmaschine aus Fig. 7 in einer anderen Perspektive,
- Fig. 9: eine, in einer perspektivischen Darstellung gezeig- te Entlaubungsmaschine, bei der auf der Saugseite des Sauggebläses zwei in Arbeitsrichtung hinterein- ander angeordnete und durch jeweils zwei gegenläu- fig drehantreibbare Förderwalzen begrenzte Ansaug- öffnungen vorgesehen sind,
- Fig. 10: die Entlaubungsmaschine aus Fig. 9 in einer Drauf- sicht auf die in einem gemeinsamen Saugkanal mün- denden Ansaugöffnungen und
- Fig. 11: die Entlaubungsmaschine aus Fig. 9 und 10 in einer Draufsicht.

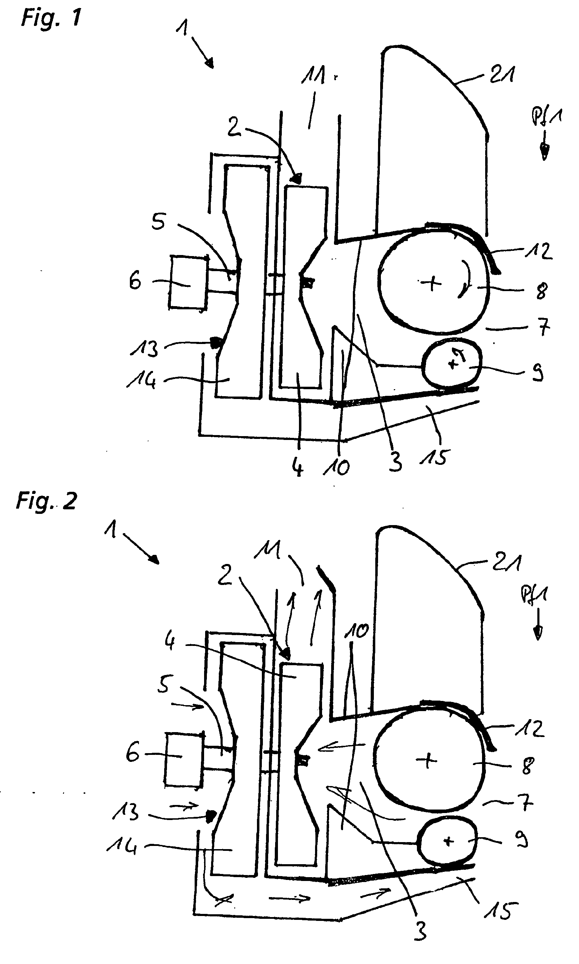

Figur 1 zeigt einen sehr schematischen Querschnitt einer im Ganzen mit 1 bezeichneten Entlaubungsmaschine, die insbesondere zum Entlauben von Weinreben verwendet werden kann.

Die Entlaubungsmaschine 1 weist ein Sauggebläse 2 auf, das als Radialgebläse ausgebildet ist und am Ende eines Saugkanals 3 angeordnet ist. Das Sauggebläse 2 hat ein Schaufelrad 4, das auf einer Welle 5 sitzt, die durch einen Hydraulikmotor 6 angetrieben ist.

Der Saugkanal 3 weist eine schlitzförmige Ansaugöffnung 7 auf, die mit der Längserstreckung ihrer Schlitzöffnung annähernd vertikal orientiert ist und durch zwei gegenläufig drehantreibbare Förderwalzen begrenzt wird. Die im Bild größere Förderwalze 8 ist dabei als eine Lochwalze ausgebildet, so dass die Saugströmung des Sauggebläses 2 durch die Saugwalze 8 hindurch ihre Saugwirkung entfalten kann. Die im Bild kleinere Walze 9 ist eine Abstreiferwalze oder Abzupferwalze, die aus Gummi hergestellt ist oder zumindest eine Gummibeschichtung aufweist.

Innerhalb des Saugkanals 3 sind Leitbleche 10 angeordnet, die den Saugstrom zur Mitte des Gebläserades 4 leiten. Radial zum Gebläserad 2 ist ein Auswurfkanal 11 angeordnet.
In Arbeitsrichtung Pf1 vor der Ansaugwalze 8 ist ein gebogenes Schutzblech 12 angeordnet, das eine Beschädigung der Lochwalze 8 oder ein Einsaugen der Früchte im Betrieb verhindern soll.

Hinter dem Sauggebläse 2 ist ein weiteres Radial-Hilfsgebläse 13 mit einem Schaufelrad 14 angeordnet, wobei das Schaufelrad 14 auf derselben Welle 5 sitzt wie das Schaufelrad 4 des Sauggebläses 2 und durch den gleichen Hydraulikmotor 6 angetrieben wird. Die Ansaugung der Luft erfolgt hier auf der Seite des Motors. Der druckseitige Ausgang des Hilfsgebläses 13 ist mit einem Austrittskanal 16 verbunden, der neben der Ansaugöffnung 7 des Ansaugkanals 3 mündet.

Im Betrieb der Entlaubungsmaschine 1 stellen sich die in Fig. 2 durch Pfeile dargestellten Luftströmungen ein. Das Sauggebläse 2 saugt Luft durch die Lochwalze 8 und die schlitzförmige Ansaugöffnung 7 an. Durch die Leitbleche 10 wird der Luftstrom in das Zentrum des Sauggebläserades 4 geführt und von dort radial durch den Auswurfkanal 11 aus dem Gebläse 2 geleitet. Das Hilfsgebläse 13 saugt Luft auf der Motorseite an und leitet diese durch den Austrittskanal in den Bereich in Arbeitsrichtung Pf1 hinter der Ansaugöffnung 7.

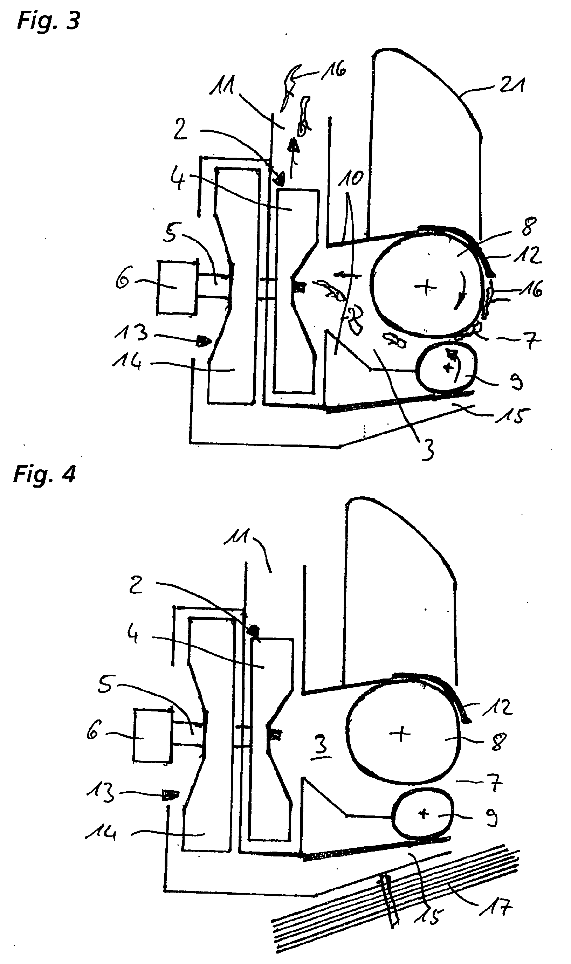

Die Fig. 3 zeigt die Entlaubungsmaschine 1 im Einsatz, wobei die Entlaubungsmaschine 1 in Arbeitsrichtung Pf1 an den zu entlaubenden Reben entlang geführt wird. Vorzugsweise ist die Entlaubungsmaschine 1 dazu am Bug eines Traktors befestigt. Blätter 16, die sich in der Nähe der Ansaugwalze 8 befinden werden durch das Sauggebläse 2 angesaugt, so dass sie auf der Walzenoberfläche anhaften und mitgenommen werden. Beim Erreichen der Gummiwalze 9 werden die Blätter 16 mitsamt ihren Blattstielen vom Stamm entfernt und ins innere des Ansaugkanals 3 gefördert. Dort werden sie vom Saugstrom des Sauggebläses 2 erfasst und sofort ins Zentrum des Gebläserades 4 befördert. Innerhalb des Sauggebläses 2 werden die Blätter 16 radial zum Auswurfkanal 11 befördert und dort aus der Entlaubungsmaschine 1 ausgeworfen.
Es besteht dabei keine Möglichkeit, dass die Blätter 16 innerhalb des Saugkanals 3 an der Lochwalze 8 haften bleiben, so dass eine zunehmende Verschmutzung der Lochwalze 8 nicht stattfinden kann. Die erfindungsgemäße Entlaubungsmaschine 1 weist dadurch eine dauerhaft gleichbleibende Saugleistung auf.
Durch die aus dem Austrittskanal ausströmende Luft des Hilfsgebläses 13 werden die an dem Stamm verbleibenden Trauben getrocknet und von leichtem Schmutz befreit, so dass eine anschließende Lese wesentlich erleichtert wird.
Das Schutzblech 12 an der Lochwalze 8 sorgt dafür, dass möglichst keine Früchte angesaugt und beschädigt werden, was die Walzen 8, 9 verschmutzen würde und dass keine Fremdkörper in die Walzen 8, 9 gelangen, die die Walzen 8, 9 beschädigen könnten, beispielsweise Drahtstücke.

Die in Fig. 4 gezeigte Ausführungsvariante weist eine in Fahrtrichtung Pf1 hinter der Ansaugöffnung 7 angeordnete Tellerbürste 17 auf, die zusätzlich zur Reinigung der am Stamm verbleibenden Früchte dient. Ansonsten entspricht die Entlaubungsmaschine 1 der in Fig. 1 gezeigten Ausführung.

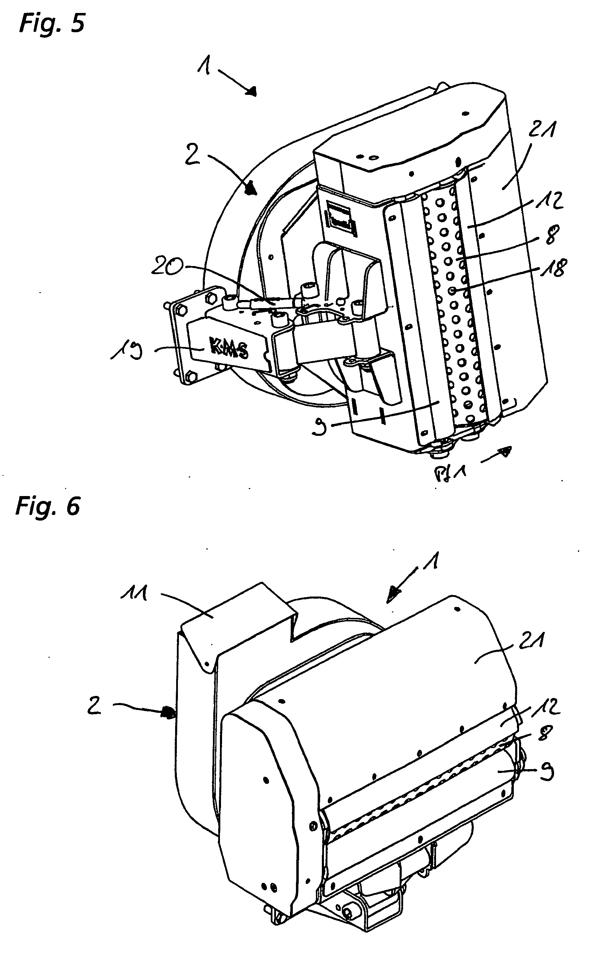

In Fig. 5 und 6 ist eine erfindungsgemäße Entlaubungsmaschine 1 aus unterschiedlichen Perspektiven gezeigt. Deutlich zu erkennen ist die in Arbeitsrichtung Pf1 vorne abgeflachte Form des Gehäuses 21, das dafür sorgt, dass die Blätter 16 in Richtung Ansaugspalt 7 gedrückt werden. Die Lochwalze 8 weist kreisrunde Ansauglöcher 18 auf und ist durch ein Schutzblech 12 teilweise abgedeckt. Eine Gummi-Abzupfwalze 9 liegt an der Lochwalze 8 an. Das Sauggebläse 2 ist als Radialgebläse ausgebildet und sitzt seitlich an dem Entlauberkopf. Der Auswurfkanal 11, aus dem die Blätter ausgeworfen werden, zeigt in Arbeitsrichtung Pf1.
Die Entlaubungsmaschine 1 ist über eine Tragarm-Konstruktion 19 an einer Zugmaschine oder einem Traktor ankoppelbar, wobei die Arbeitsposition über eine Hydraulik 20 einstellbar ist.

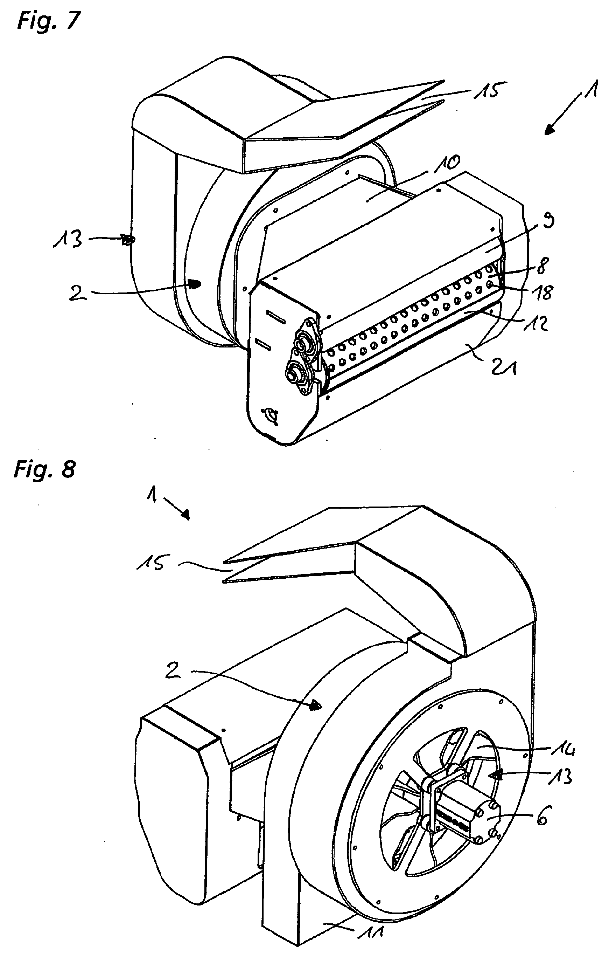

Die Entlaubungsmaschine 1 der Fig. 7 und 8 weist zusätzlich zu der in Fig. 5 und 6 gezeigten Maschine ein zusätzliches Gebläse 13 zum Anblasen der entlaubten Früchte auf. Das Hilfsgebläse 13 ist koaxial zum Sauggebläse 2 angeordnet und wird über denselben Motor 6 angetrieben. Der Austrittskanal 15 der Luft ist in Arbeitsrichtung Pf1 hinter der Ansaugöffnung 7 angeordnet.

Die zuvor beschriebenen Entlaubungsmaschinen weisen lediglich eine Ansaugöffnung auf. Bei schneller Fahrt der Entlaubungsmaschinen wird diese eine Ansaugöffnung eventuell derart rasch an den Reben vorbeigeführt, dass nur das in vorderer Linie zur Ansaugöffnung hängende Laub angesaugt werden kann, während die dahinterliegenden Laublagen der Reben nicht bearbeitet werden.

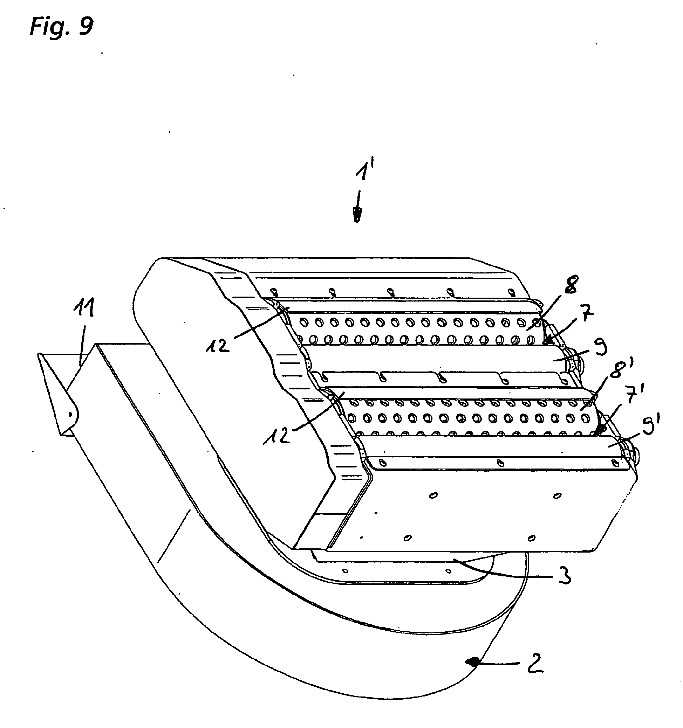

In Fig. 9 ist eine Entlaubungsmaschine 1' dargestellt, die deshalb zwei, in Arbeitsrichtung hintereinander angeordnete und durch jeweils zwei gegenläufig drehantreibbare Förderwalzen 8, 8'; 9, 9' begrenzte Ansaugöffnungen 7, 7' hat. Die beiden Ansaugöffnungen 7, 7' münden hier in einem gemeinsamen Saugkanal 3, dem ein Sauggebläse 2 zugeordnet ist. Von den jeweils eine Saugöffnung 7, 7' begrenzenden Förderwalzen 8, 8' ; 9, 9' ist eine Förderwalze 8, 8' als Lochwalze ausgebildet, während die andere Förderwalze 9, 9' aus Gummi hergestellt sein oder eine Gummioberfläche haben kann.

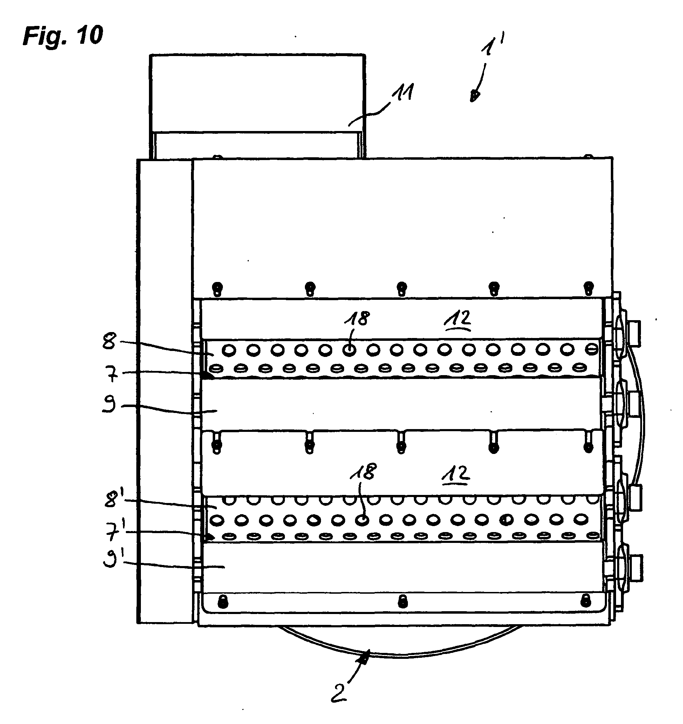

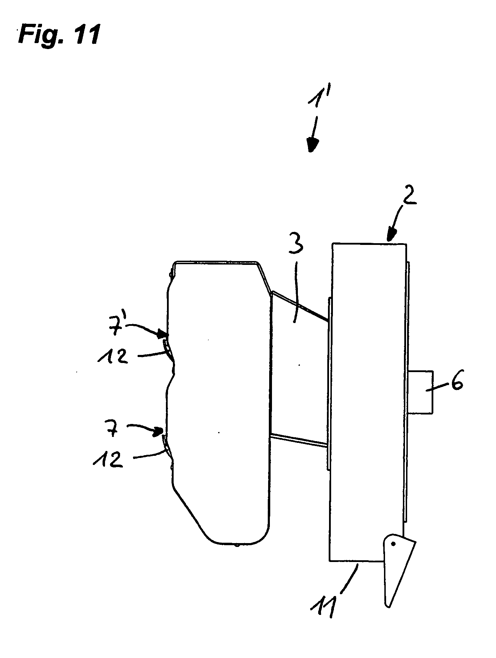

Die in den Figuren 9 bis 11 gezeigte Entlaubungsmaschine 1' vermag auch bei schneller Fahrt die Reben wirkungsvoll zu entlauben. Während über die in Fahrtrichtung vordere Ansaugöffnung 7 eine erste Lage Laub angesaugt werden kann, ist es mit Hilfe der zweiten Ansaugöffnung 7' möglich, auch die dahinterliegenden Laublagen zu erfassen. Die in den Figuren 9 bis 11 gezeigte Entlaubungsmaschine 1' zeichnet sich daher durch eine besonders hohe Arbeitsleistung aus.

### [Originalanmeldung]

Gegenstand der Erfindung ist eine Entlaubungsmaschine, welche Blätter bzw. Laub zum gewünschten Zeitpunkt teilweise oder komplett entfernt.
Gleichzeitig mit einem Luftstrom die dadurch frei werdenden Früchte, Traubenansätze von den Blütenkäppchen befreit, damit die junge Frucht nicht unter den verklebten Blütenkäppchen von Pilzkrankheiten befallen wird. Beim Einsatz unmittelbar vor der Handlese der Weintrauben werden die Blätter komplett entfernt und die von Regen oder Tau nassen Trauben mit Luftstrom getrocknet.

Zum Stand der Technik werden genannt:
DE 20 2004 013 531
DE 20 2006 003 135

Mit vorliegenden Erfindungen werden folgende Vorteilsmerkmale erreicht:
Durch Werkstoff Aluminium geringes Eigengewicht Modell Mini zum Beispiel 28 kg, Modell Standard 38 kg. Hohe Fahrgeschwindigkeit bis 10km/h. Regelbare Saugleistung durch separaten hydraulischen Antrieb des Sauggebläses. Geringe Drehzahl der Lochwalze. Viele große Löcher in der Lochwalze, sehr leistungsstarkes Gebläse ergeben einen so starken Sog an der Lochwalze, dass die Blätter im Bereich bis 5 cm. angezogen werden. Dies erlaubt ein sanftes Entlanggleiten an der Laubwand. Trauben können noch ausweichen und werden nicht durch aggressives vorbeistreifen des Entlauberkopfes erdrückt. Durch das 2. Gebläse werden gleichzeitig Traubenansätze gereinigt oder Trauben getrocknet.

Die Erfindung ist gekennzeichnet durch hohen Unterdruck an der Lochwalze. Diese hält die Blätter so fest und zieht sie in die Maschine.
Die gegenläufige Gummiwalze zupft die Blattstiele ab. Das Blatt kann dadurch mit dem Luftstrom durch das Gebläse ins Freie transportiert werden.

Das Blatt wird durch das Gebläse transportiert, dies erspart das verschleißintensive Abbürsten der Lochwalze und erhöht die Fahrgeschwindigkeit.

Das axiale Sauggebläse sitzt direkt an der Lochwalze und erzeugt auf der gesamten Länge den gleichen Unterdruck auf jedem Loch.
Kein Bogen, kein Antriebsteil sitzt im Luftstrom, das bedeutet freie Bahn und kurzen Weg der Blätter durch den Entlauberkopf.

## Patentansprüche

1. Entlaubungsmaschine (1, 1'), die insbesondere zum Entlauben von Reben bestimmt ist, und die wenigstens ein Sauggebläse (2) hat, das auf seiner Saugseite einen Saugkanal (3) mit einer schlitzförmigen Ansaugöffnung (7, 7') aufweist, welche Ansaugöffnung (7, 7') durch zumindest zwei gegenläufig drehantreibbare Förderwalzen (8, 9; 8', 9') begrenzt ist, welche das Laub in den Saugkanal (3) fördern, **dadurch gekennzeichnet, dass** eine (8, 8') dieser zumindest zwei Förderwalzen perforiert ist, so dass die Blätter an diese Förderwalze (8, 8') angesaugt werden, dass die die schlitzförmige Ansaugöffnung (7, 7') begrenzenden Förderwalzen (8, 9; 8', 9') derart auf Abstand zueinander angeordnet sind, dass zwischen ihnen ein Spalt verbleibt, und dass die zweite (9, 9') der eine Ansaugöffnung (7, 7') begrenzenden Förderwalzen (8, 9; 8', 9') eine Haftoberfläche aufweist und dazu als Gummiwalze ausgebildet ist oder eine Gummi-Beschichtung hat, durch die die an der perforierten Förderwalze (8, 8') angesaugten Blätter (16) vorzugsweise mit den Blattstielen vom Stamm abgezupft werden.

2. Entlaubungsmaschine nach Anspruch 1, **dadurch gekennzeichnet, dass** das zumindest eine Sauggebläse (2) innerhalb des wenigstens einen Saugkanals (3) oder an dem freien Ende wenigstens eines Saugkanals (3) angeordnet ist und die Blätter (16) durch den wenigstens einen Saugkanal (3) und das Sauggebläse (2) hindurch gefördert werden.

3. Entlaubungsmaschine nach Anspruch 1 oder 2, **dadurch gekennzeichnet, dass** an der Druckseite des zumindest einen Sauggebläses (2) mindestens ein Auswurfkanal (11) angeordnet ist.

4. Entlaubungsmaschine nach einem der Ansprüche 1 bis 3, **dadurch gekennzeichnet, dass** die wenigstens eine perforierte Förderwalze (8, 8') Löcher (18) und/oder Schlitze aufweist.

5. Entlaubungsmaschine nach einem der Ansprüche 1 bis 4, **dadurch gekennzeichnet, dass** die Drehzahl der Förderwalzen (8, 9; 8', 9') unabhängig von der Drehzahl des zumindest einen Sauggebläses (2) regelbar ist.

6. Entlaubungsmaschine nach einem der Ansprüche 1 bis 5, **dadurch gekennzeichnet, dass** die Förderwalzen (8, 9; 8', 9') und/oder das zumindest eine Sauggebläse (2) einen Hydraulikantrieb aufweisen.

7. Entlaubungsmaschine nach einem der Ansprüche 1 bis 6, **dadurch gekennzeichnet, dass** die Entlaubungsmaschine (1, 1') ein Hilfsgebläse (13) aufweist, dessen Austrittskanal (15) in Arbeitsrichtung (Pf1) vor oder hinter der Ansaugöffnung (7, 7') des zumindest einen Sauggebläses angeordnet ist, so dass die entlaubten Reben angeblasen werden.

8. Entlaubungsmaschine nach Anspruch 7, **dadurch gekennzeichnet, dass** das Sauggebläse (2) und/oder das Hilfsgebläse (13) ein Schaufelradgebläse ist.

9. Entlaubungsmaschine nach einem der Ansprüche 1 bis 8, **dadurch gekennzeichnet, dass** das zumindest eine Sauggebläse (2) und/oder das Hilfsgebläse (13) ein Radialgebläse ist.

10. Entlaubungsmaschine nach einem der Ansprüche 1 bis 9, **dadurch gekennzeichnet, dass** das Hilfsgebläse (13) durch die gleiche Antriebswelle (5) wie das zumindest eine Sauggebläse (2) angetrieben ist und/oder dass vorzugsweise die Schaufelräder des Sauggebläses (2) und gegebenenfalls des Hilfsgebläses (13) auf derselben Welle (5) angeordnet sind.

11. Entlaubungsmaschine nach einem der Ansprüche 1 bis 10, **dadurch gekennzeichnet, dass** innerhalb des Saugkanals (3) Leitbleche (10) angeordnet sind, die das abgetrennte Laub in das Zentrum des Sauggebläses (2) leiten.

12. Entlaubungsmaschine nach einem der Ansprüche 1 bis 11, **dadurch gekennzeichnet, dass** die Blätter (16) radial aus dem zumindest einen Sauggebläse (2) ausgeworfen werden.

13. Entlaubungsmaschine nach einem der Ansprüche 1 bis 12, **dadurch gekennzeichnet, dass** die Entlaubungsmaschine (1, 1') mit einem Laubhefter und/oder einem Laubschneider einseitig oder überzeilig kombinierbar ist.

## Claims

1. A defoliation device (1, 1'), more particularly intended for defoliating vines, having at least one suction fan (2) which has a suction channel (3) with a slit-shaped suction opening (7, 7') on its suction side, the suction opening (7, 7') being delimited by at least two transport rollers (8, 9, 8', 9') which can be rotatably driven in opposite directions, said transport rollers conveying the foliage into the suction channel (3), **characterized in that** one (8, 8') of these at least two transport rollers has perforations such that the leaves are suctioned onto these transport rollers (8, 8'), **in that** the transport rollers (8, 9, 8', 9') delimiting the slit-shaped suction opening (7, 7') are arranged at a distance from one another such that a gap remains between said suction openings, and **in that** the second (9, 9') transport roller (8, 9, 8', 9') delimiting the suction opening (7, 7') has an adhesive surface, and is designed as a rubber roller for that purpose, or has a rubber coating, by means of which the leaves (16) suctioned onto the perforated transport roller (8, 8') can be plucked off from the trunk, preferably with the leaf stalks.

2. A defoliation device according to claim 1, **characterized in that** the at least one suction fan (2) is arranged within the at least one suction channel (3) or at the free end of the at least one suction channel (3), and the leaves (16) are conveyed through the at least one suction channel (3) and the suction fan (2).

3. A defoliation device according to claims 1 or 2, **characterized in that** at least one ejection channel (11) is arranged on the pressure side of the at least one suction fan (2).

4. A defoliation device according to one of the claims 1 to 3, **characterized in that** the at least one perforated transport roller (8, 8') has holes (18) and/or slits.

5. A defoliation device according to one of the claims 1 to 4, **characterized in that** the speed of the transport rollers (8, 9, 8', 9') can be controlled independently of the speed of the at least one suction fan (2).

6. A defoliation device according to one of the claims 1 to 5, **characterized in that** the transport rollers (8, 9, 8', 9') and/or the at least one suction fan (2) has/have a hydraulic drive.

7. A defoliation device according to one of the claims 1 to 6, **characterized in that** the defoliation device (1, 1') has an auxiliary fan (13), the outlet channel (15) of which, seen in the working direction (Pf1), is arranged upstream or downstream of the suction opening (7, 7') of the at least one suction fan such that air is blown onto the defoliated vines.

8. A defoliation device according to claim 7, **characterized in that** the suction fan (2) and/or the auxiliary fan (13) is/are a paddle blade fan.

9. A defoliation device according to one of the claims 1 to 8, **characterized in that** the at least one suction fan (2) and/or the auxiliary fan (13) is/are a radial fan.

10. A defoliation device according to one of the claims 1 to 9, **characterized in that** the auxiliary fan (13) is driven by the same drive shaft (5) as the at least one suction fan (2) and/or **in that** preferably the paddle blades of the suction fan (2) and, optionally, those of the auxiliary fan (13) are arranged on the same shaft (5).

11. A defoliation device according to one of the claims 1 to 10, **characterized in that** directional baffles (10) are arranged within the suction channel (3), said directional baffles guiding the separated foliage into the center of the suction fan (2).

12. A defoliation device according to one of the claims 1 to 11, **characterized in that** the leaves (16) are radially ejected from the at least one suction fan (2).

13. A defoliation device according to one of the claims 1 to 12, **characterized in that** the defoliation device (1, 1') can be unilaterally or multi-laterally combined with a foliage trimmer and/or a foliage cutter.

## Revendications

1. Machine de défoliage (1, 1') qui est notamment destinée à défolier les ceps de vignes et qui a au moins un ventilateur d'aspiration (2) présentant sur son côté aspiration un canal d'aspiration (3) doté d'un orifice d'aspiration (7, 7') en forme de fente, lequel orifice d'aspiration (7, 7') est délimité par au moins deux rouleaux de transport (8, 9, 8', 9') pouvant être entraînés par rotation de manière contrarotative, lesquels transportent les feuilles dans le canal d'aspiration (3), **caractérisée en ce qu'**un (8, 8') de ces au moins deux rouleaux de transport est perforé de manière à ce que les feuilles soient aspirées sur ce rouleau de transport (8, 8'), **en ce que** les rouleaux de transport (8, 9, 8', 9') délimitant l'orifice d'aspiration (7, 7') en forme de fente sont disposés à un tel écart l'un par rapport à l'autre qu'il reste une fente entre eux, et **en ce que** le deuxième (9, 9') des rouleaux de transport (8, 9, 8', 9') délimitant l'orifice d'aspiration (7, 7') présente une surface adhérente et est en plus réalisé en tant que rouleau en caoutchouc ou a un revêtement en caoutchouc, au moyen duquel les feuilles (16) aspirées sur le rouleau de transport perforé (8, 8') sont arrachées du tronc, de préférence avec les tiges.

2. Machine de défoliage selon la revendication 1, **caractérisée en ce que** l'au moins un ventilateur d'aspiration (2) est disposé à l'intérieur de l'au moins un canal d'aspiration (3) ou sur l'extrémité libre au moins d'un canal d'aspiration (3) et **en ce que** les feuilles (16) sont transportées à travers l'au moins un canal d'aspiration (3) et à travers le ventilateur d'aspiration (2).

3. Machine de défoliage selon la revendication 1 ou 2, **caractérisée en ce qu'**au moins un canal d'éjection (11) est disposé sur le côté refoulement de l'au moins un ventilateur d'aspiration (2).

4. Machine de défoliage selon l'une quelconque des revendications 1 à 3, **caractérisée en ce que** l'au moins un rouleau de transport perforé (8, 8') présente des trous (18) et/ou des fentes.

5. Machine de défoliage selon l'une quelconque des revendications 1 à 4, **caractérisée en ce que** la vitesse de rotation des rouleaux de transport (8, 9, 8', 9') est réglable indépendamment de la vitesse de rotation de l'au moins un ventilateur d'aspiration (2).

6. Machine de défoliage selon l'une quelconque des revendications 1 à 5, **caractérisée en ce que** les rouleaux de transport (8, 9, 8', 9') et/ou l'au moins un ventilateur d'aspiration (2) présentent une commande hydraulique.

7. Machine de défoliage selon l'une quelconque des revendications 1 à 6, **caractérisée en ce que** la machine de défoliage (1, 1') présente un ventilateur auxiliaire (13) dont le canal de sortie (15), en direction de travail (Pf1), est disposé devant ou derrière l'orifice d'aspiration (7, 7') de l'au moins un ventilateur d'aspiration, de sorte que les ceps défoliés sont insufflés.

8. Machine de défoliage selon la revendication 7, **caractérisée en ce que** le ventilateur d'aspiration (2) et/ou le ventilateur auxiliaire (13) sont un ventilateur à roue à ailettes.

9. Machine de défoliage selon l'une quelconque des revendications 1 à 8, **caractérisée en ce que** l'au moins un ventilateur d'aspiration (2) et/ou le ventilateur auxiliaire (13) sont un ventilateur radial.

10. Machine de défoliage selon l'une quelconque des revendications 1 à 9, **caractérisée en ce que** le ventilateur auxiliaire (13) est commandé par le même arbre moteur (5) que l'au moins un ventilateur d'aspiration (2) et/ou **en ce que**, de préférence, les roues à ailettes du ventilateur d'aspiration (2) et, le cas échéant, du ventilateur auxiliaire (13) sont disposées sur le même arbre (5).

11. Machine de défoliage selon l'une quelconque des revendications 1 à 10, **caractérisée en ce qu'**à l'intérieur du canal d'aspiration (3) sont disposées des tôles de guidage (10) qui guident les feuilles arrachées au centre du ventilateur d'aspiration (2).

12. Machine de défoliage selon l'une quelconque des revendications 1 à 11, **caractérisée en ce que** les feuilles (16) sont éjectées radialement hors de l'au moins un ventilateur d'aspiration (2).

13. Machine de défoliage selon l'une quelconque des revendications 1 à 12, **caractérisée en ce que** la machine de défoliage (1, 1') est combinable sur un côté ou au-dessus du rang à une machine de palissage et/ou à une rogneuse-écimeuse.
